# EUROPEAN PATENT SPECIFICATION

(11) **EP 3 932 571 B1**
(45) Date of publication and mention of the grant of the patent: **01.05.2024**
(21) Application number: 20763761.2
(22) Date of filing: 17.02.2020
(51) Int. Cl.: B08B 5/02, B05B 1/14, H01H 35/00, G01S 7/497, G02B 27/00

(54) **AIR PURGE UNIT**
LUFTSPÜLUNGSEINHEIT
UNITÉ DE PURGE D'AIR

(30) Priority: 26.02.2019 JP 2019032760
(43) Date of publication of application: 05.01.2022
(73) Proprietor: OMRON Corporation, Shiokoji-dori, Shimogyo-ku, Kyoto-shi Kyoto 600-8530 (JP)
(72) Inventor: NAKAMURA, Jumpei, Kyoto-shi, Kyoto 600-8530 (JP); NAKASHIMA, Hirotaka, Kyoto-shi, Kyoto 600-8530 (JP)
(74) Representative: Becker, Eberhard
(86) International application number: PCT/JP2020/005964
(87) International publication number: WO 2020/175203

(56) References cited:
- JP-A- H10 202 576
- JP-U- H0 736 027
- JP-U- S4 835 359
- JP-U- S59 109 311
- US-A1- 2003 142 403
- US-A1- 2015 277 111
- US-A1- 2018 093 644

## Description

### BACKGROUND

### Technical Field

The invention relates to an air purge unit.

### Description of Related Art

Conventionally, there is a photoelectric sensor that detects whether a workpiece is present by using light. The photoelectric sensor performs various detections by, for example, emitting detection light toward the workpiece and then analyzing the light transmitted through the workpiece or reflected from the workpiece (for example, Patent Document 1).

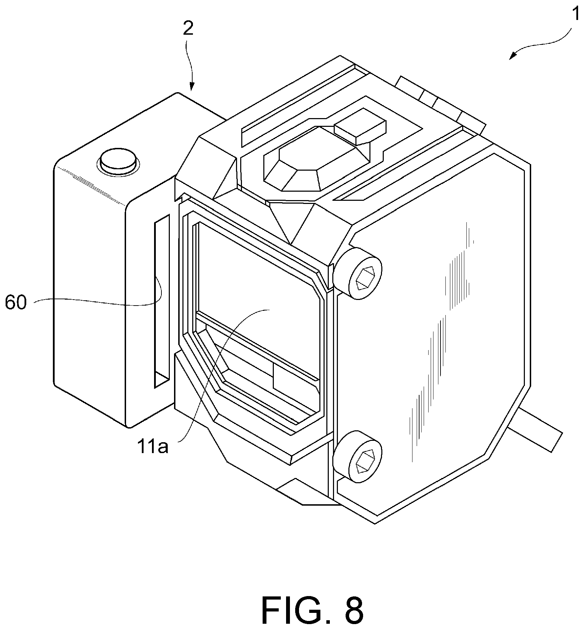

The photoelectric sensor may be installed in an environment where machining is performed. In such an environment, contamination such as dust and processing oil may adhere to a lens surface of the photoelectric sensor through which light passes, and the amount of light passing through the lens surface may decrease. Then, detection of the workpiece may not be performed properly. Therefore, a method is adopted, which attaches an air purge unit that blows air to the lens surface to the photoelectric sensor to prevent contamination from adhering to the lens surface. For example, as shown in FIG. 8, an air purge unit 2 provided with an elongated air blow-out port 60 along a lens surface 11a may be attached to a photoelectric sensor 1 to remove contamination on the lens surface 11a.

Patent literature US 2018/093644 A1 relates to a vehicle camera including a camera and a housing. The camera has a lens unit. The housing has an accommodation space to accommodate the camera therein. The housing has an opening for the lens unit to take a photo via the opening. The housing has at least one air vent at the opening. The air vent corresponds in position to the lens unit of the camera. An inside of the housing is provided with a delivery passage for air flow to flow therethrough. One end of the delivery passage is connected to the air vent. A rear of the housing is provided with an air delivery tube and a connecting device. The air delivery tube is configured to deliver the air flow to the delivery passage. The connecting device is configured to open or close the air delivery tube. The connecting device is electrically connected with a control unit.

Patent literature US 2003/142403 A1 relates to an air purge system for an optical sensor, including a two sided lens having an optical sensor positioned on the first side and a fluid stream on the second side. The air purge system further includes, a plenum having an inlet, an array of parallel channels and an outlet, whereby the array of parallel channels, is disposed between the inlet and the outlet. The outlet is positioned on the second side of the housing and may be adapted to direct a fluid stream substantially parallel to the second side of the lens.

Patent literature US 2015/277111 A1 relates to an automatic camera lens cleaning system, including a blower assembly having a housing with a camera secured thereto. The camera lens of the camera is encircled in an annular member having a plurality of apertures thereon, wherein the apertures are in air communication the interior volume of the housing and a tube connected thereto. The tube is in air communication with an air compressor pump, which is driven by engine or an electronic solenoid and actuated by a central processing unit (CPU) or the like. The air compressor pump can force air through the apertures so as to clean the camera lens.

Patent literature JP H07-36027 U relates to a cleaning device for a photodetector which prevents contamination of a window material forming a light emitting/receiving surface of the photodetector.

### Related Art

### Patent Document

[Patent Document 1] Japanese Laid-Open No. 2011-077050

### SUMMARY

### Problems to be Solved

However, when contamination that is difficult to remove adheres to the lens surface, it is necessary to blow out air having a high flow velocity from the air blow-out part. In this case, it is necessary to supply a large amount of air to the air purge unit, which causes problems such as an increase in electric power for supplying air.

Therefore, the invention provides an air purge unit that can remove contamination on the lens surface of the photoelectric sensor with a small air supply amount.

### Means for Solving the Problems

The invention is set out in the appended set of claims. The following disclosure serves a better understanding of the present invention. An air purge unit according to one aspect of the invention includes: a housing; an air supply port for supplying air into the housing; and a plurality of air blow-out ports arranged on a side wall of the housing for blowing the air to a lens surface of a photoelectric sensor. The photoelectric sensor comprises a first side surface and a second side surface opposite to the first side surface, wherein the first side surface and the second side surface are positioned to sandwich the lens surface, and the housing of the air purge unit is attached to only one of the first side surface and the second side surface of the photoelectric sensor.

According to this aspect, the plurality of air blow-out ports are provided and arranged on the side wall of the air purge unit. Therefore, it is possible to blow air over a wide range of the lens surface with the plurality of air blow-out ports while reducing the size of each air blow-out port. By reducing the size of the air blow-out port, the flow velocity of the air blown from each air blow-out port of the air purge unit increases as compared with the conventional air purge unit provided with one large air blow-out port. That is, the air purge unit according to the invention can remove contamination on the lens surface of the photoelectric sensor with a small air supply amount.

In the above aspect, the plurality of air blow-out ports may be provided side by side in a straight line.

In the above aspect, the plurality of air blow-out ports may be provided along an extending direction of the lens surface.

According to this aspect, the air blown out from the air blow-out ports of the air purge unit easily hits the lens surface, and the contamination adhering to the lens surface is efficiently removed.

In the above aspect, the plurality of air blow-out ports may be circular holes.

In the above aspect, corners connecting inner surfaces of the plurality of air blow-out ports and a side wall surface of the housing may be chamfered.

According to this aspect, air is blown out to spread from the air blow-out port. That is, since the air blown out from the air blow-out port hits a wide range of the lens surface, it is possible to remove contamination adhering over a wide range of the lens surface.

### Effects

According to the invention, it is possible to provide an air purge unit that can remove contamination on a lens surface of a photoelectric sensor with a small air supply amount.

### BRIEF DESCRIPTION OF THE DRAWINGS

FIG. 1 is a perspective view showing the appearance of a photoelectric sensor according to the present embodiment.
FIG. 2 is a perspective view showing the appearance of the air purge unit according to the present embodiment.
FIG. 3 is a perspective view showing the appearance of the air purge unit according to the present embodiment.
   (a) and (b) of FIG. 4 are views showing how the air supply device is attached to the air supply port, wherein (a) of FIG. 4 shows a state before attachment and (b) of FIG. 4 shows a state after attachment.
FIG. 5 is a view showing how the air purge unit is attached to the photoelectric sensor.
FIG. 6 is a view showing the photoelectric sensor with the air purge unit attached.
   (a) and (b) of FIG. 7 are cross-sectional views of the air purge unit showing the shape of the air blow-out port.
FIG. 8 is a view showing the photoelectric sensor with the conventional air purge unit attached.

### DESCRIPTION OF THE EMBODIMENTS

Embodiments of the invention will be described with reference to the accompanying drawings. In each drawing, parts having the same reference numerals have the same or similar configurations.

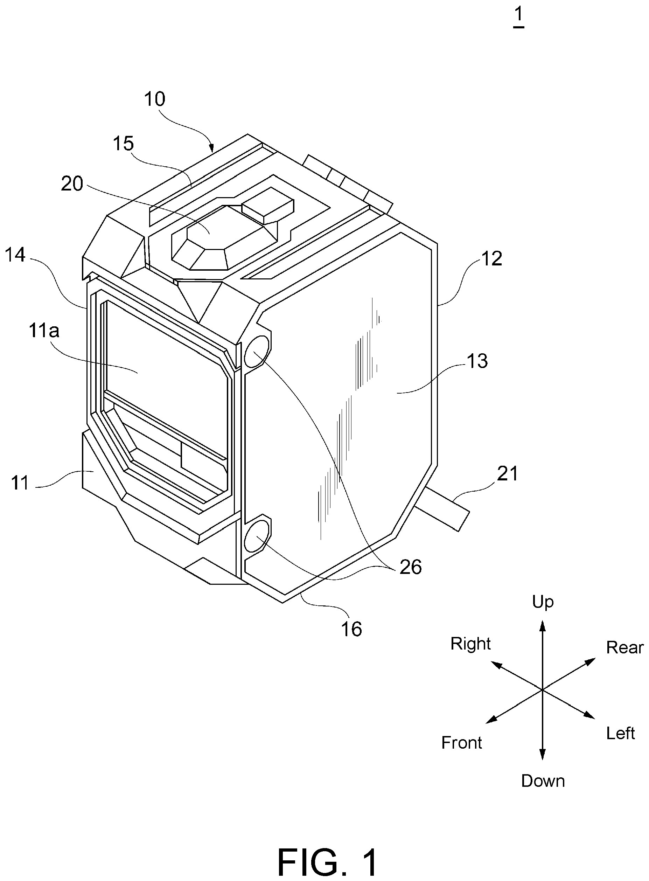

FIG. 1 is a perspective view showing the appearance of a photoelectric sensor 1 according to the present embodiment. First, the photoelectric sensor 1 with an air purge unit attached will be described with reference to FIG. 1. The photoelectric sensor 1 detects whether an object is present in a detection region and a surface state of the object by using light. There are several detection methods using the photoelectric sensor 1. For example, there is a method, in which two photoelectric sensors are prepared, one photoelectric sensor 1 is used as a light projector that emits light and the other photoelectric sensor 1 is used as a light receiver that receives light, and the detection is performed by analyzing the light received by the light receiver. If an object exists between the light projector and the light receiver, the amount of light received by the light receiver decreases so the photoelectric sensor 1 analyzes this decrease amount to detect whether an object is present. The photoelectric sensor 1 used in the detection method is called a transmissive type.

Further, as another detection method, there is a method, which performs detection by using a photoelectric sensor in which the light projector and the light receiver are integrated. In the method, light is emitted from the photoelectric sensor 1 toward a reflective plate or an object, and the reflected light is received by the same photoelectric sensor 1. The photoelectric sensor 1 detects whether an object is present and a surface state of the object by analyzing the received light. Such a photoelectric sensor that functions as both the light projector and the light receiver is called a reflective type. In this specification, the reflective photoelectric sensor 1 will be described as an example, but the photoelectric sensor 1 to which the invention is applied may be a transmissive photoelectric sensor.

FIG. 1 shows the photoelectric sensor 1 in a state where the air purge unit is not attached. The photoelectric sensor 1 includes a housing 10, a window 20, and a cable 21.

The housing 10 houses various parts such as a light projecting element and a light receiving element included in the photoelectric sensor 1, and protects them from impact and contamination. The housing 10 may be made of, for example, metal or resin. The housing 10 has a front surface 11, a back surface 12, a side surface 13, a side surface 14, a top surface 15, and a bottom surface 16. The front surface 11 is a surface located on the traveling direction side of the projected light, and forms a frame surrounding the lens surface 11a through which light is transmitted. The back surface 12 is located at a position opposite to the front surface 11 with the inside of the housing 10 interposed therebetween. Further, when the direction in which the front surface 11 is located is the front and the direction in which the back surface 12 is located is the rear, the housing 10 has the side surfaces 13 and 14 on the left and right. The side surface 13 and the side surface 14 are located opposite to each other with the inside of the housing 10 interposed therebetween. Further, the housing 10 has the top surface 15 and the bottom surface 16 at the top and bottom. Similar to the side surfaces 13 and 14, the top surface 15 and the bottom surface 16 are located opposite to each other with the inside of the housing 10 interposed therebetween.

The front surface 11 is a surface surrounding the lens surface 11a which transmits light. The lens surface 11a is formed of a member that transmits light, and transmits the light emitted from a light projecting unit (not shown) included in the photoelectric sensor 1. Further, the lens surface 11a transmits light that is reflected from a detection target and incident on a light receiving unit (not shown) included in the photoelectric sensor 1. The lens surface 11a may be made of, for example, transparent resin or glass.

The light projecting unit is a unit that emits light to the detection region, and is composed of a light projecting element and a light projecting lens. The light projecting element is an element that emits light, and may be, for example, a laser or a light emitting diode. The light projecting lens converts the light generated from the light projecting element into parallel light. A part of the projecting lens may be exposed to the outside of the housing 10, and for example, the lens surface 11a shown in FIG. 1 may be the surface of the light projecting lens.

The light receiving unit is a unit that detects incident light, and includes a light receiving element and a light receiving lens. The light receiving element is an element that detects light, and may be, for example, a photodiode or the like. The light receiving lens is a lens that forms an image of the light incident from the detection region on the light receiving element. A part of the light receiving lens may be exposed to the outside of the housing 10, and for example, the lens surface 11a shown in FIG. 1 may be the surface of the light receiving lens.

The housing 10 has a communication hole 26. The communication hole 26 is a hole provided across the inside of the housing 10 so as to communicate the side surface 13 and the side surface 14. In the present embodiment, the housing 10 has two communication holes 26, which are respectively provided in the upper part and the lower part of the housing 10. The communication holes 26 are used when connecting the air purge unit described later to the photoelectric sensor 1. Specifically, the air purge unit is screwed to the photoelectric sensor 1 by inserting a screw from one end of the communication hole 26 and screwing the tip of the screw protruding from the other end into a screw hole provided in the air purge unit.

The window 20 is located to cover an indicator lamp (not shown) provided on the upper part of the photoelectric sensor 1, and protects the indicator lamp from impact and contamination. The window 20 is preferably made of transparent resin or glass so that the user can visually recognize the indicator lamp from the outside. The indicator lamp outputs the operating status of the photoelectric sensor 1 by emitting light. The operating status may include, for example, the power supply status and the detection status of the photoelectric sensor 1. The indicator lamp may be composed of a light emitting element such as a light emitting diode. The indicator lamp may be turned on, for example, when the power of the photoelectric sensor 1 is turned on or when the photoelectric sensor 1 detects a workpiece.

The cable 21 transmits the electric power supplied from a power supply to the photoelectric sensor 1. Further, the cable 21 may connect the photoelectric sensor 1 to an amplifier unit and transmit a detection result of the photoelectric sensor 1. At least one of the power supply and the amplifier unit may be built in the photoelectric sensor 1.

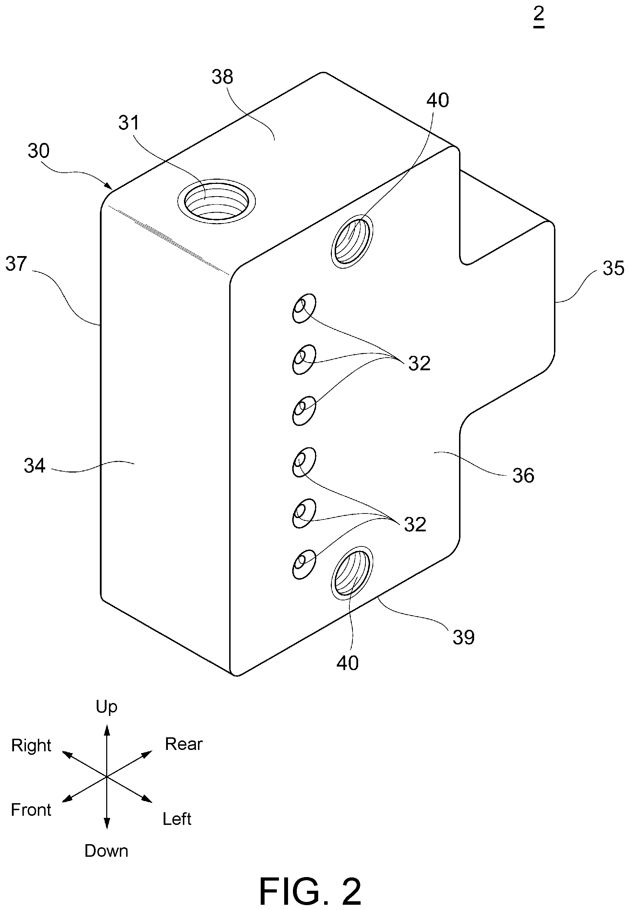

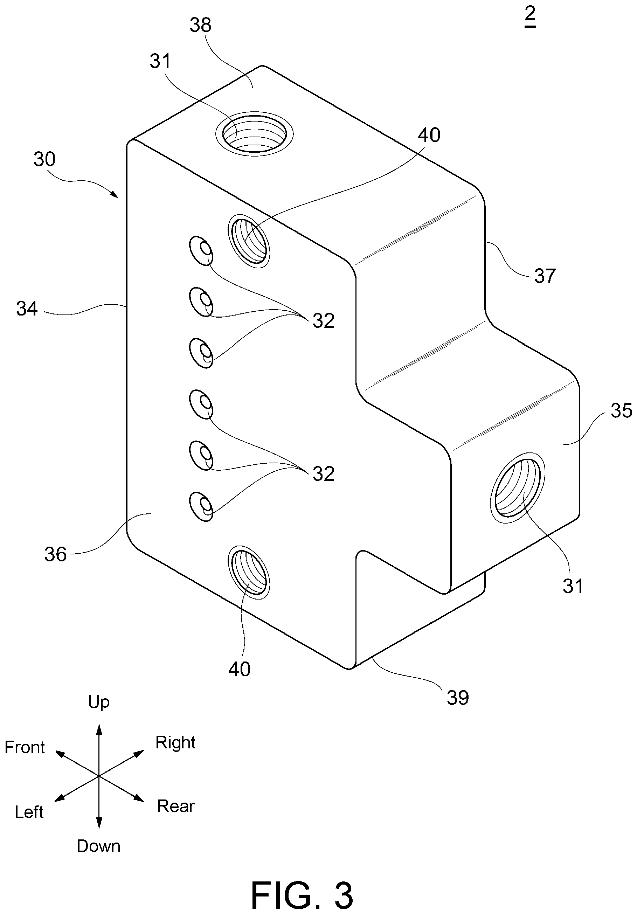

FIG. 2 and FIG. 3 are perspective views showing the air purge unit 2 attached to the photoelectric sensor 1. FIG. 2 is a view of the air purge unit 2 viewed from the side of the front surface 34, and FIG. 3 is a view of the air purge unit 2 viewed from the side of the back surface 35. The configuration of the air purge unit 2 will be described with reference to FIG. 2 and FIG. 3.

The air purge unit 2 is a device that is attached to the side surface 13 or the side surface 14 of the photoelectric sensor 1 and blows air to the lens surface 11a of the photoelectric sensor 1. The air purge unit 2 includes a housing 30, an air supply port 31 provided in the housing 30, and air blow-out ports 32.

The housing 30 has the front surface 34, the back surface 35, a side surface 36, a side surface 37, a top surface 38, and a bottom surface 39. As shown in FIG. 2, the front surface 34 and the back surface 35 are located opposite to each other with the inside of the housing 30 interposed therebetween. The direction in which the front surface 34 is located is the front, and the direction in which the back surface 35 is located is the rear. Further, the air purge unit 2 has the side surface 36 and the side surface 37 on the left and right. The side surface 36 and the side surface 37 are located opposite to each other with the inside of the housing 30 interposed therebetween. Furthermore, the air purge unit 2 has the top surface 38 and the bottom surface 39 at the top and bottom. The top surface 38 and the bottom surface 39 are located opposite to each other with the inside of the housing 30 interposed therebetween.

In the present embodiment, the housing 30 has a shape that the upper and lower portions on the rear side are recessed inward, but the shape of the housing 30 is not limited thereto. For example, the housing 30 may have a substantially rectangular parallelepiped shape as a whole without recessing the upper and lower portions on the rear side.

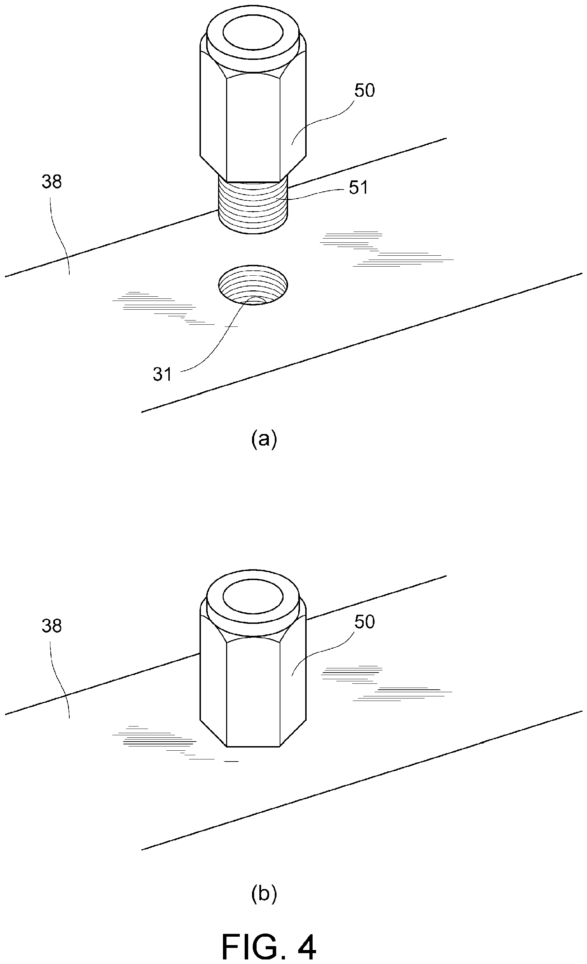

The air supply port 31 is a portion to which an air supply device 50 (described later with reference to FIG. 4) for supplying air into the housing 30 is connected. As shown in FIG. 3, the air supply ports 31 are provided on the top surface 38 and the back surface 35. Although not shown, the air supply port 31 is also provided on the bottom surface 39. By providing the air supply ports 31 at a plurality of positions of the housing 30 in this way, the air supply device 50 can be attached to an appropriate position depending on the location where the air purge unit 2 is arranged. For example, when the air purge unit 2 is installed in a space having a small width in the vertical direction, even if the air supply device 50 cannot be attached to the air supply port 31 on the top surface 38, the air supply device 50 can still be attached to the air supply port 31 on the back surface 35.

The air supply device 50 connected to the air supply port 31 is a component that supplies the air received from an air supply source into the housing 30. Here, the air supply device 50 will be described with reference to FIG. 4. (a) of FIG. 4 is a view showing a state before the air supply device 50 is attached to the air supply port 31, and (b) of FIG. 4 is a view showing a state after the air supply device 50 is attached to the air supply port 31. As shown in (a) of FIG. 4, the air supply device 50 is formed in a tubular shape. One end (upper end in (a) of FIG. 4) of the air supply device 50 is connected to the air supply source, and the other end (lower end in (a) of FIG. 4) is connected to the air supply port 31 of the air purge unit 2. The air supply device 50 is detachably connected to the air supply port 31.

As shown in (a) of FIG. 4, the air supply device 50 has a screw portion 51 that is threaded at the lower end. On the other hand, the air supply port 31 of the air purge unit 2 is threaded on the inner surface thereof. Therefore, the air supply device 50 is connected to the air supply port 31 by screwing the screw portion 51 with the inner surface of the air supply port 31. The connection between the air supply device 50 and the air supply port 31 is not necessarily realized by screwing, and any method that can attach/detach the air supply device 50 to/from the air supply port 31 can be adopted.

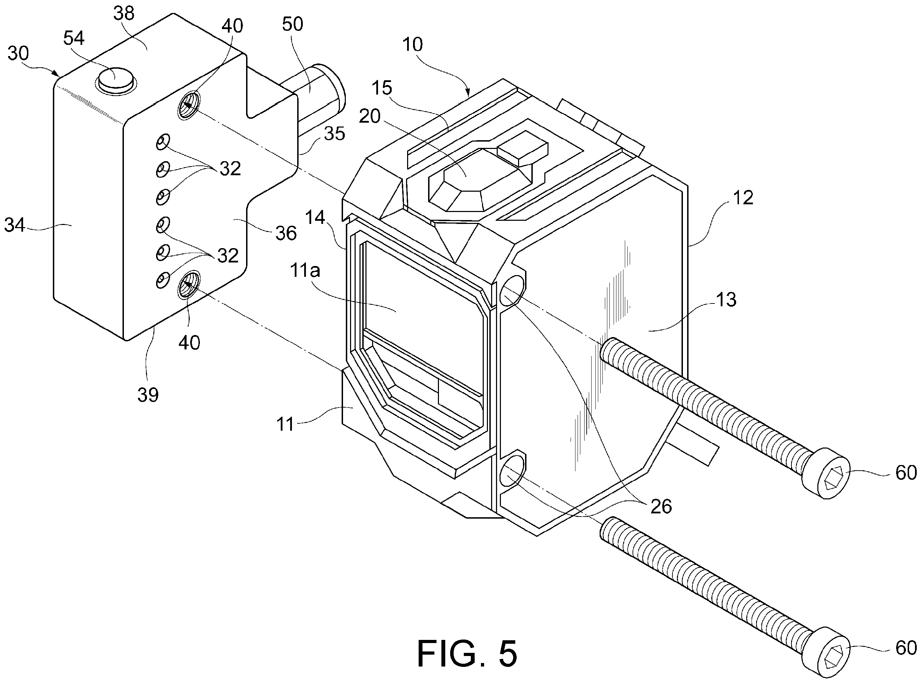

The description will be continued by reverting to FIG. 2 and FIG. 3. Among the three air supply ports 31 provided in the housing 30, plugs are attached to the air supply ports 31 to which the air supply device 50 is not attached. All the three air supply ports 31 are connected to the air blow-out ports 32 via an air flow path formed inside the housing 30, the three air supply ports 31 are also connected to one another via the flow path. For this reason, when air is supplied from any one of the air supply ports 31, the air supplied from the other air supply ports 31 leaks out. Therefore, by attaching the plug to the air supply port 31 to which the air supply device 50 is not connected, leakage of the air is prevented. For example, in the air purge unit 2 shown in FIG. 5, the air supply device 50 is connected to the air supply port 31 provided on the back surface 35, and the plugs 54 are attached to the air supply ports 31 provided on the top surface 38 and the bottom surface 39.

A plurality of air blow-out ports 32 are provided and arranged on a side wall of the housing 30. The air supplied from the air supply port 31 is blown out from the air blow-out ports 32 through the flow path inside the housing 30. The air blown out from the air blow-out ports 32 may be blown out constantly, or may be blown out at regular time intervals. Further, in the present embodiment, the air blow-out port 32 is a circular hole, but the shape is not limited thereto, and the air blow-out port 32 may be a polygonal hole such as a triangular hole or a quadrangular hole.

A screw hole 40 is provided on the side wall of the housing 30. The screw hole 40 is threaded on the inner surface, and the screw for attaching the air purge unit 2 to the photoelectric sensor 1 is inserted thereinto.

A method of attaching the air purge unit 2 to the photoelectric sensor 1 will be described with reference to FIG. 5. FIG. 5 is a view before attaching the air purge unit 2 to the photoelectric sensor 1. FIG. 5 shows the screw 60 and the air purge unit 2 for sandwiching the photoelectric sensor 1. First, the screw 60 is inserted into the communication hole 26 of the photoelectric sensor 1. The screw 60 is formed longer than the length of the communication hole 26 of the photoelectric sensor 1. Therefore, with the screw 60 inserted into the communication hole 26, the tip of the screw 60 protrudes from one end of the communication hole 26. After inserting the screw 60 into the communication hole 26, the tip of the screw 60 protruding from the communication hole 26 is screwed into the screw hole 40 of the air purge unit 2.

As described above, the air purge unit 2 is screwed to the photoelectric sensor 1. Therefore, the air purge unit 2 is firmly attached to the photoelectric sensor 1, and the air purge unit 2 can be prevented from falling off from the photoelectric sensor 1. The method of attaching the air purge unit 2 is not limited to screwing. For example, locking portions composed of a concave portion or a convex portion may be provided on the photoelectric sensor 1 and the air purge unit 2, and the air purge unit 2 may be attached via the locking portions. Further, the air purge unit 2 may be attached by adhering the air purge unit 2 to the photoelectric sensor 1. Further, an adjustment mechanism for adjusting the position and orientation of the photoelectric sensor 1 may be attached to the side surface 13 of the photoelectric sensor 1 where the air purge unit 2 is not attached.

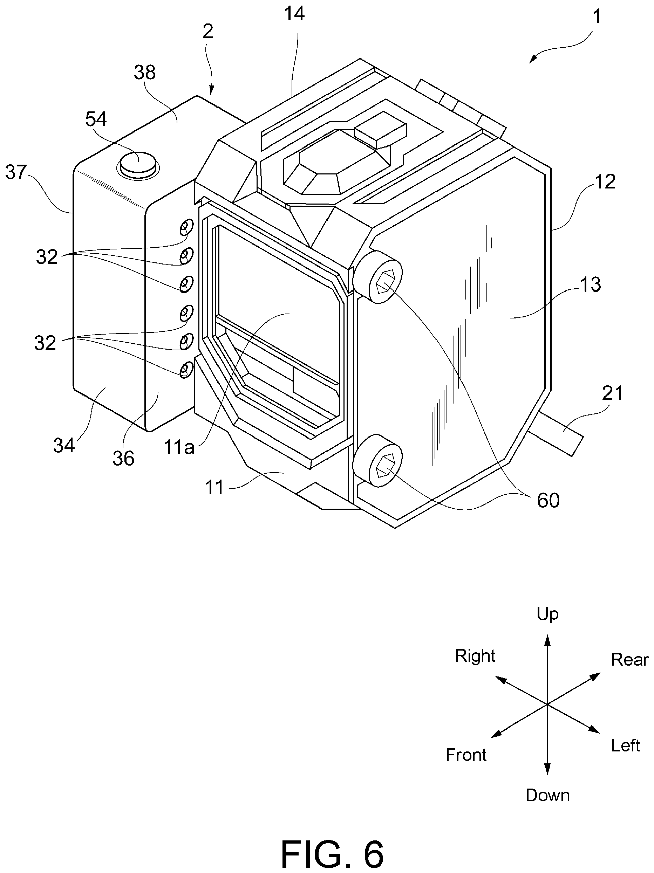

FIG. 6 is a perspective view showing the photoelectric sensor 1 with the air purge unit 2 attached. As shown in FIG. 6, a plurality of air blow-out ports 32 are provided and arranged on the side wall of the air purge unit 2. Therefore, it is possible to blow air over a wide range of the lens surface 11a with the plurality of air blow-out ports 32 while reducing the size of each air blow-out port 32. By reducing the size of the air blow-out port 32, the flow velocity of the air blown from each air blow-out port 32 of the air purge unit 2 increases as compared with the conventional air purge unit provided with one large air blow-out port. That is, the air purge unit 2 according to the present embodiment can remove contamination on the lens surface 11a of the photoelectric sensor 1 with a small air supply amount.

Further, the air blow-out ports 32 are provided close to the lens surface 11a. Therefore, the air blown out from the air blow-out ports 32 can reach the lens surface 11a without losing the momentum to efficiently remove the contamination adhering to the lens surface 11a.

In addition, in the present embodiment, the plurality of air blow-out ports 32 are provided side by side in a straight line along the extending direction of the lens surface 11a. However, the plurality of air blow-out ports 32 are not necessarily provided in a straight line. For example, the plurality of air blow-out ports 32 may be provided so that the adjacent air blow-out ports 32 are displaced from each other in the front-rear direction.

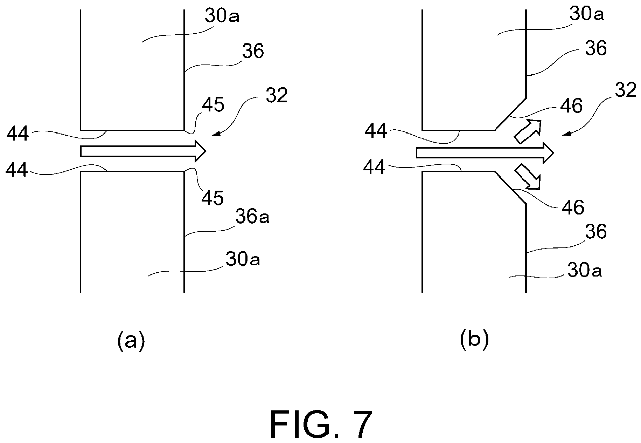

Next, the shape of the air blow-out port 32 will be described with reference to FIG. 7. FIG. 7 shows cross-sectional views of the air blow-out port 32 of the air purge unit 2 when the air blow-out port 32 is divided in the vertical direction shown in FIG. 2. (a) of FIG. 7 is a view showing an example of the air blow-out port 32, and (b) of FIG. 7 is a view showing another example of the air blow-out port 32. The arrows shown in FIG. 7 indicate the flow of air blown out from the air blow-out port 32.

First, the air blow-out port 32 shown in (a) of FIG. 7 will be described. The inner surface 44 of the air blow-out port 32 shown in (a) of FIG. 7 intersects the surface (side surface 36) of the side wall 30a of the housing 30 at the corner 45. The inner surface 44 of the air blow-out port 32 and the side surface 36 intersect at the corner 45 at a substantially right angle. Therefore, as shown by the arrow, the air blown out from the air blow-out port 32 is blown out to the outside of the air purge unit 2 without spreading.

On the other hand, the corner 46 where the inner surface 44 of the air blow-out port 32 and the side surface 36 shown in (b) of FIG. 7 intersect is chamfered. In the present embodiment, the corner 46 is C-chamfered (corner chamfered), and the diameter of the air blow-out port 32 increases from the inside toward the outside of the housing 30. By chamfering the corner 46 connecting the inner surface 44 of the air blow-out port 32 and the side surface 36 in this way, the air passing through the air blow-out port 32 is oriented to spread. Therefore, the air blown out from the air blow-out port 32 can be blown over a wide range of the lens surface 11a to efficiently remove contamination.

In the present embodiment, the corner 46 is C-chamfered (corner chamfered), but the type of chamfering is not limited thereto. For example, R-chamfering (round chamfering) or the like may be applied.

The embodiments described above are provided to facilitate the understanding of the invention. Each element included in the embodiment and its arrangement, material, condition, shape, size, etc. are not limited to those exemplified, and can be changed as appropriate. In addition, the configurations shown in different embodiments can be partially replaced or combined.

### [Appendix]

An air purge unit (2) includes: a housing (30); an air supply port (31) for supplying air into the housing (30); and a plurality of air blow-out ports (32) arranged on a side wall (30a) of the housing (30) for blowing the air to a lens surface (11a) of a photoelectric sensor (1).

### [Descriptions of Reference Numerals]

1 ... photoelectric sensor, 2 ... air purge unit, 10 ... housing, 11 ... front surface, 11a ... lens surface, 12 ... back surface, 13 ... side surface, 14 ... side surface, 15 ... top surface, 16 ... bottom surface, 20 ... window, 21 ... cable, 26 ... communication hole, 30 ... housing, 30a ... side wall, 31 ... air supply port, 32 ... air blow-out port, 34 ... front surface, 35 ... back surface, 36 ... side surface, 37 ... side surface, 38 ... top surface, 39 ... bottom surface, 40 ... screw hole, 44 ... inner surface, 45 ... corner, 46 ... corner, 50 ... air supply device, 51 ... screw portion, 54 ... plug, 60 ... air blow-out port

## Claims

1. An air purge unit (2), comprising:
a housing (30);
an air supply port (31) for supplying air into the housing (30); and
a plurality of air blow-out ports (32) arranged on a side wall (30a) of the housing (30) for blowing the air to a lens surface (11a) of a photoelectric sensor (1), wherein the photoelectric sensor (1) comprises a first side surface (13) and a second side surface (14) opposite to the first side surface (13), wherein the first side surface (13) and the second side surface (14) are positioned to sandwich the lens surface (11a), and the housing (30) of the air purge unit (2) is adapted to be attached to only one of the first side surface (13) and the second side surface (14) of the photoelectric sensor (1).

2. The air purge unit (2) according to claim 1, wherein the plurality of air blow-out ports (32) are provided side by side in a straight line.

3. The air purge unit (2) according to claim 1 or 2, wherein the plurality of air blow-out ports (32) are provided along an extending direction of the lens surface (11a).

4. The air purge unit (2) according to any one of claims 1 to 3, wherein the plurality of air blow-out ports (32) are circular holes.

5. The air purge unit (2) according to any one of claims 1 to 4, wherein corners connecting inner surfaces (44) of the plurality of air blow-out ports (32) and a side wall surface (36) of the housing (30) are chamfered.

## Patentansprüche

1. Luftspüleinheit (2), umfassend:
ein Gehäuse (30);
eine Luftzufuhröffnung (31) zum Zuführen von Luft in das Gehäuse (30); und
eine Vielzahl von Luftausblasöffnungen (32), die an einer Seitenwand (30a) des Gehäuses (30) angeordnet sind, um die Luft zu einer Linsenfläche (11a) eines photoelektrischen Sensors (1) zu blasen, wobei der photoelektrische Sensor (1) eine erste Seitenfläche (13) und eine zweite Seitenfläche (14) gegenüber der ersten Seitenfläche (13) umfasst, wobei die erste Seitenfläche (13) und die zweite Seitenfläche (14) so positioniert sind, dass sie die Linsenfläche (11a) einschließen, und das Gehäuse (30) der Luftspüleinheit (2) angepasst ist, um nur an einer der ersten Seitenfläche (13) und der zweiten Seitenfläche (14) des fotoelektrischen Sensors (1) angebracht zu sein.

2. Luftspüleinheit (2) gemäß Anspruch 1, wobei die Vielzahl von Luftausblasöffnungen (32) nebeneinander in einer geraden Linie bereitgestellt sind.

3. Luftspüleinheit (2) gemäß Anspruch 1 oder 2, wobei die Vielzahl der Luftausblasöffnungen (32) entlang einer Erstreckungsrichtung der Linsenfläche (11a) bereitgestellt sind.

4. Luftspüleinheit (2) gemäß einem der Ansprüche 1 bis 3, wobei die Vielzahl der Luftausblasöffnungen (32) kreisförmige Löcher sind.

5. Luftspüleinheit (2) gemäß einem der Ansprüche 1 bis 4, wobei Ecken, die Innenflächen (44) der Vielzahl von Luftausblasöffnungen (32) und eine Seitenwandfläche (36) des Gehäuses (30) verbinden, abgeschrägt sind.

## Revendications

1. Unité de purge d'air (2), comprenant :
un boîtier (30) ;
un orifice d'amenée d'air (31) pour amener de l'air dans le boîtier (30) ; et
une pluralité d'orifices de soufflage d'air (32) agencés sur une paroi latérale (30a) du boîtier (30) pour souffler l'air vers une surface de lentille (11a) d'un capteur photoélectrique (1), dans laquelle le capteur photoélectrique (1) comprend une première surface latérale (13) et une deuxième surface latérale (14) opposée à la première surface latérale (13), dans laquelle la première surface latérale (13) et la deuxième surface latérale (14) sont positionnées pour prendre en sandwich la surface de lentille (11a), et le boîtier (30) de l'unité de purge d'air (2) est adapté pour être fixé à une seule de la première surface latérale (13) et de la deuxième surface latérale (14) du capteur photoélectrique (1).

2. Unité de purge d'air (2) selon la revendication 1, dans laquelle la pluralité d'orifices de soufflage d'air (32) sont prévus côte à côte en ligne droite.

3. Unité de purge d'air (2) selon la revendication 1 ou 2, dans laquelle la pluralité d'orifices de soufflage d'air (32) sont prévus le long d'une direction d'extension de la surface de lentille (11a).

4. Unité de purge d'air (2) selon l'une quelconque des revendications 1 à 3, dans laquelle la pluralité d'orifices de soufflage d'air (32) sont des trous circulaires.

5. Unité de purge d'air (2) selon l'une quelconque des revendications 1 à 4, dans laquelle des coins reliant des surfaces intérieures (44) de la pluralité d'orifices de soufflage d'air (32) et une surface de paroi latérale (36) du boîtier (30) sont chanfreinés.
